# FASCICULE DE BREVET EUROPEEN

(11) **EP 1 565 303 B1**
(45) Date de publication et mention de la délivrance du brevet: **01.08.2007**
(21) Numéro de dépôt: 03778414.7
(22) Date de dépôt: 21.10.2003
(51) Int. Cl.: B29C 53/50, B29C 65/00, B29C 53/38, B29C 65/02, B29D 23/20

(54) **PROCEDE DE FABRICATION DE TUBES SOUPLES PLASTIQUES OU METALLOPLASTIQUES**
VERFAHREN ZUR HERSTELLUNG VON FLEXIBLEN RÖHREN AUS KUNSTSTOFF ODER AUS METALLPLASTISCHEM MATERIAL
METHOD FOR MAKING PLASTIC OR METALLOPLASTIC FLEXIBLE TUBES

(30) Priorité: 25.10.2002 FR 0213352
(43) Date de publication de la demande: 24.08.2005
(73) Titulaire: Cebal SAS, 92230 Genevilliers (FR)
(72) Inventeur: BENQUET, Jacques, F-21240 Talant (FR)
(74) Mandataire: Fénot, Dominique
(86) Numéro de dépôt international: PCT/FR2003/003105
(87) Numéro de publication internationale: WO 2004/039561

(56) Documents cités:
- WO-A-01/60588
- FR-A- 1 528 456
- US-A- 4 175 882
- US-A- 4 733 800

## Description

### DOMAINE TECHNIQUE

L'invention concerne le perfectionnement d'un procédé de fabrication de tubes souples destinés à stocker et à distribuer des produits liquides à pâteux. Ces tubes souples sont dits "laminés" car ils comprennent une tête et une jupe souple, elle-même obtenue à partir d'une bande dite "laminée", comprenant en général plusieurs couches plastiques ou métalliques. La jupe est obtenue par découpe dans un manchon cylindrique, lui-même obtenu par roulage d'une bande plane. Le roulage est effectué de telle sorte que la bande est mise en forme de cylindre, les bords de ladite bande étant mis en regard l'un de l'autre, en général avec un léger recouvrement, puis soudés entre eux. Une tête de tube est ensuite soudée à une extrémité de ladite jupe. La tête comporte un goulot avec un orifice de distribution du produit contenu dans le tube et une épaule reliant le goulot à ladite jupe. Le tube ainsi réalisé est ensuite livré au conditionneur , la tête en bas et l'orifice de distribution obturé - par exemple par une capsule vissée sur le goulot - pour que celui-ci remplisse le tube par l'extrémité restée ouverte du tube. Une fois le tube rempli, son extrémité ouverte est aplatie de façon à effectuer une soudure qui réunit les portions de paroi mises en vis-à-vis à la suite de l'aplatissement et qui scelle ainsi le produit conditionné (soudure dite transversale ou finale).

### ETAT DE LA TECHNIQUE

On connaît déjà, par exemple par FR 1 571 778, la fabrication classique de tubes cylindriques par roulage d'une bande puis soudure thermique, par induction par exemple, des bords de la bande après que ceux-ci aient été mis en regard l'un de l'autre. Nous appellerons par la suite les tubes cylindriques ainsi formés "manchons" pour les distinguer des tubes souples destinés à stocker et distribuer des produits liquides à pâteux.

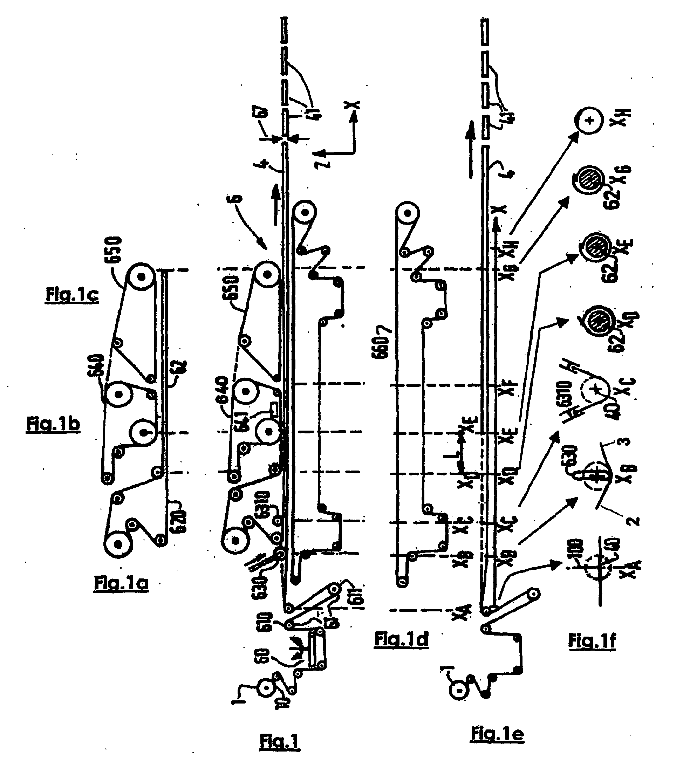

Les figures 1 à 4 illustrent un dispositif mettant en oeuvre un procédé typique de l'art antérieur permettant de fabriquer de tels manchons.

La figure 1 est une vue, en coupe longitudinale dans le plan XZ ou PXZ, du dispositif ou ligne de production (6) permettant de fabriquer un manchon (4) à partir d'une bande (1) enroulée sous forme de bobine. Le manchon est ensuite débité suivant une longueur donnée pour obtenir des jupes cylindriques (41) destinées à être assemblées à des têtes pour obtenir des tubes souples.

Sur la figure 1e, on a repéré différents moyens de la ligne de production (6) selon la direction longitudinale X par leur abscisse X=XA à XF.

Les figures 1a à 1d sont des vues en coupe selon le plan PXZ des différentes bandes mobiles (620, 640, 650 et 660) du dispositif (6) fermées sur elles-mêmes, positionnées les unes par rapport aux autres selon l'axe X, mais décalées selon l'axe Z de manière à les présenter séparément:
- figure 1a: bande mobile (620) solidaire du mandrin central (62), appelée "bande interne", représentée en coupe sur la figure 4, située au-dessous de la zone de recouvrement des bords 2 et 3 de la bande, et s'étendant de X=XD à X=XG, typiquement sur une longueur de 1,8 m environ.
- figure 1b : bande mobile (640), dite "bande externe chaude", située au-dessus de la zone de recouvrement des bords 2 et 3 de la bande, s'étendant de X=XE à X=XF, typiquement sur une longueur de 0,4 m environ
- figure 1c : bande mobile (650), dite "bande externe froide", située au-dessus de la zone de recouvrement des bords 2 et 3 de la bande, s'étendant de X=XF à X=XG, typiquement sur une longueur de 1 m environ.
- figure 1d : bande mobile (660), dite bande de transport, située au-dessous de la bande roulée et du manchon, entraînant le tube sur une longueur de 2,5 m environ, entre X=XB et X=XH,

La figure 1e et la figure 1f décrivent plus particulièrement la bande (1) dans ladite ligne de fabrication (6) et la réalisation du manchon par roulage et soudage des bords de la dite bande (1). La figure 1e représente la bande et le manchon en coupe dans le plan PXZ. La figure 1f illustre, sous forme de coupes transversales par un plan YZ, en différentes abscisses, notées de XA à XH le long de l'axe X, les étapes successives du roulage de la bande (1), du chevauchement des bords (2) et (3) de ladite bande et du soudage desdits bords.

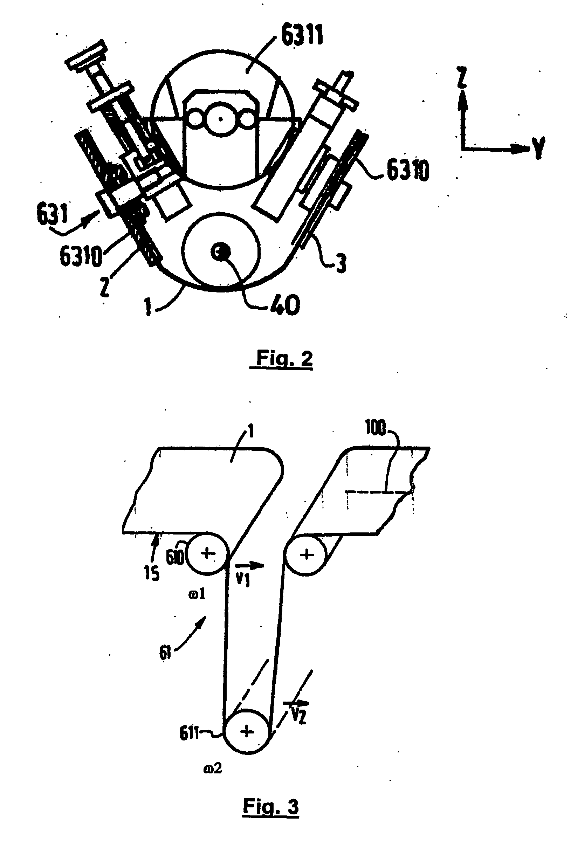

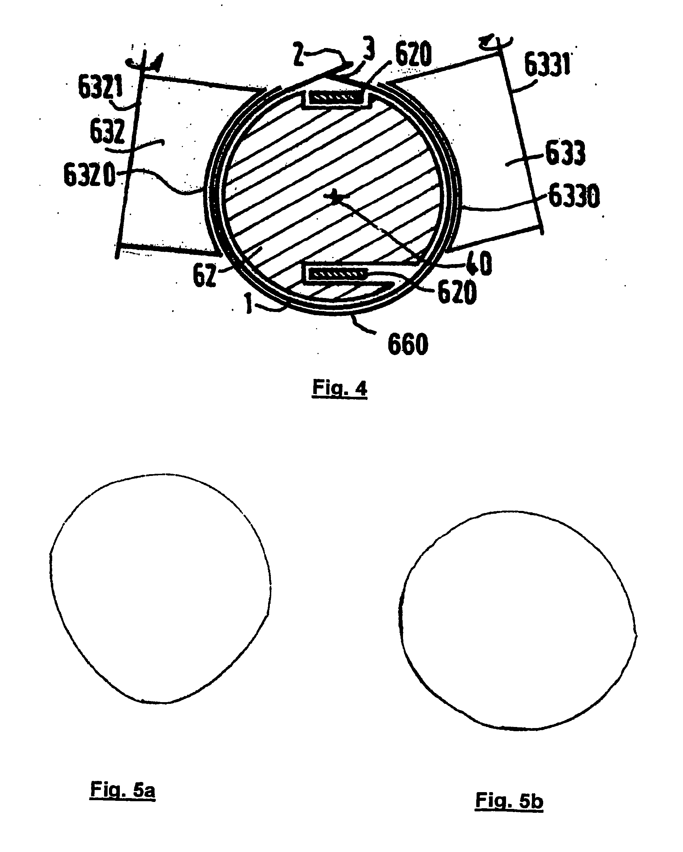

Dans ce qui suit, relativement à la figure 1, nous indiquerons, d'amont vers l'aval, les différents moyens présents sur la ligne (6), outre les différentes bandes mobiles des figures 1a à 1e, certains de ces moyens n'étant pas représentés en tant que tels sur la figure 1 pour ne pas l'alourdir :
a) en amont de X=XA, qui représente le point de la ligne (6) où la bande arrive plane et en position transversale correcte, c'est-à-dire avec son plan médian (100) comprenant l'axe longitudinal (40) fixe, se trouvent d'abord les moyens (10) d'approvisionnement en bande (1), typiquement un dévideur de bobine, puis un moyen de guidage latéral (60),
   - puis, comme illustré de manière plus détaillée sur la figure 3, deux rouleaux de tension (61), avec un rouleau de tension amont (610) et un rouleau de tension aval (611), dont la différence de vitesse de rotation induit une tension dans la bande destinée à stabiliser ses bords ou rives en supprimant des ondulations latérales lorsqu'elles sont présentes. La figure 3 est une vue schématique d'un dispositif (61) comprenant deux rouleaux de tension (610) et (611), avec soit, les deux rouleaux étant de même diamètre comme illustré sur la figure 3, le second rouleau (611) tournant à une vitesse angulaire ω2 supérieure à celle ω1 du premier rouleau (610), soit, les vitesses angulaires étant voisines, le second rouleau (611) ayant un plus grand diamètre que le premier rouleau (610), de manière à ce que la vitesse linéaire de la bande (1) soit plus élevée en sortie du second rouleau que du premier rouleau. De ce fait, la bande (1) est soumise entre ces deux rouleaux à une tension longitudinale pouvant atteindre la limite élastique du matériau constituant la bande.
   On a représenté la bande (1) en amont du rouleau (610) avec des irrégularités ou ondulations des bords, alors que, après mise sous tension de la bande, en aval du rouleau (611), la bande ne présente pas de bords irréguliers. Cette tension, typiquement comprise entre 0,3 et 0,8 fois la limite élastique du matériau formant la bande (1), est maintenue durant la formation du tube (4).
b) entre X=XA et X=XB, on trouve en général des moyens complémentaires permettant de mieux contrôler le positionnement de la bande sur l'axe Y. Un bon contrôle de la position transversale de la bande est en effet important si l'on veut obtenir une soudure longitudinale régulière car il faut maîtriser la configuration géométrique dans laquelle se trouvent les bords de la bande au moment de la soudure.
c) au point X=XB, un roulette centrale (630) est mise en appui sur la bande (1) au niveau de son plan médian (100), de manière à commencer le roulage de cette bande selon un profil transversal représenté sur la figure 1 f.
d) au point X=XC, les bords (2) et (3) de la bande sont engagés dans les gorges des roulettes à gorge (6310), la bande présentant alors un profil transversal représenté sur la figure 1f. La figure 2 représente, en coupe dans un plan PYZ, un dispositif (631) de guidage des bords (2,3) de la bande (1), à l'aide de deux roulettes à gorge (6310), les bords étant maintenus dans les gorges, ce dispositif (631) comprenant un support circulaire (6311) fixé lui- même au bâti de la ligne (6).
e) entre X=XC et X=XD, se trouvent notamment des moyens (non représentés sur la figure 1) pour maintenir en position le mandrin central (62) et éventuellement pour poursuivre le roulage de la bande.
f) entre X=XD et X=XE, des galets de roulage (632) et (633) sont appliqués latéralement, comme représenté sur la figures 4, de manière à rabattre les bords (2,3) de la bande. La figure 4 illustre par une coupe dans un plan PYZ le roulage de la bande (1) à l'aide des galets de roulage (632) et (633), galets qui présentent respectivement une surface concave (6320) et (6330) et un axe de rotation (6321) et (6331), de manière à mettre en regard les bords supérieur (2) et inférieur (3) en vue de leur soudure. Les axes (6321) et (6331) peuvent être verticaux ou inclinés - comme illustré sur la figure 4 - leur point de convergence situés du même côté que la zone de recouvrement, de façon à maintenir plus fermement les bords 2 et 3 en regard l'un de l'autre et à obtenir une géométrie de recouvrement la plus stable possible. Il est en effet essentiel que la configuration géométrique dans laquelle se trouvent les bords de la bande soit la plus stable possible au moment de la soudure. C'est notamment elle qui détermine la largeur de recouvrement, donc la largeur de la soudure visible.
g) entre X=XE et X=XF, les bords sont maintenus superposés l'un sur l'autre (ou simplement accolés l'un contre l'autre, comme dans le procédé décrit dans EP 0 627 982 (Karl Mägerle Lizenz)) grâce à un appui exercé par la bande externe chaude (640) sur la bande interne (620). Sous l'effet de cet appui, ces bords se soudent entre eux grâce à un apport thermique effectué à ce niveau, soit juste avant l'entrée dans la zone X= XE à XF, soit dans la zone X=XE à XF elle-même, par exemple en utilisant un inducteur (641) agissant directement sur la bande lorsque celle-ci est métalloplastique.
h) entre X= XF et X=XG, la soudure est refroidie pendant que le manchon reste soutenu intérieurement par le mandrin central (62). La zone de soudure est elle-même maintenue comprimée entre la bande mobile interne (620) et la bande externe froide (650) pendant tout ce trajet.
i) Entre XG et XH, le manchon cylindrique ainsi obtenu sort de son dispositif de conformation (les bandes mobiles 620 et 650 et le mandrin central (62)) puis est débité (67) à la longueur voulue en jupes cylindriques (41).

Le document WO 01/60588 décrit un procédé de fabrication de jupes de tubes souples selon le préambule de la revendication 1. Ce procédé de fabrication comprend une étape de déformation pouvant aller jusqu'à la limite élastique de la bande plane. Cette déformation permet de faire disparaître d'éventuelles ondulations des bordures de la bande.

### PROBLEME POSE

Malgré toutes les précautions prises pour contrôler le positionnement latéral de la bande, la configuration géométrique dans laquelle se trouvent les bords de la bande au moment de la soudure n'est pas aussi stable que souhaité et la qualité de la soudure en pâtit. Même si l'on peut éviter des défauts visibles sur une même jupe, la largeur de la soudure longitudinale peut varier de façon importante d'une jupe à une autre et il devient difficile et coûteux de contrôler la solidité de la soudure. Le phénomène s'amplifiant avec la vitesse de défilement de la bande, la productivité du procédé est de ce fait limitée.

De plus, en sortant de son dispositif de conformation (les bandes 620 et 650 et le mandrin central (62)), on constate que, dans un grand nombre de cas, notamment lorsque la bande d'origine comporte plus de 70% en volume de matière thermoplastique, le manchon perd sa forme parfaitement circulaire. Sa section prend en effet une forme en "goutte d'eau" telle que celle illustrée dans l'exemple présenté ci-après. Ceci est particulièrement préjudiciable pour les opérations ultérieures effectuées dans le cadre de la fabrication du tube souple. En premier lieu, lors de l'assemblage de la tête de tube sur une extrémité de la jupe, celle-ci coïncide mal avec l'extrémité circulaire de la tête moulée. Ensuite, l'autre extrémité de la jupe est une source ultérieure de problèmes puisque le conditionneur doit remplir le tube souple en introduisant une buse par cette extrémité ouverte de la jupe. Si cette extrémité ouverte n'est pas parfaitement circulaire, l'introduction automatique de la buse de remplissage peut être perturbée (collage de l'extrémité de la jupe sur la buse de remplissage par exemple), ce qui impose l'ajout de moyens coûteux de centrage et de calibrage pour atteindre les cadences de remplissage voulues. En dernier lieu, lorsque le tube est rempli, cette même extrémité fait l'objet d'une soudure finale qui est grandement facilitée si l'extrémité de la jupe présente une géométrie circulaire répétitive.

La demanderesse a donc cherché à modifier ledit procédé de fabrication de façon à éviter de tels inconvénients.

### OBJET DE L'INVENTION

L'invention a pour objet une amélioration du procédé de fabrication de tubes souples laminés tel que décrit précédemment consistant à introduire une étape préalable à l'étape de fabrication de la bande décrite précédemment. Préalablement à sa mise en forme de cylindre par rabattement puis mise en regard ou accolement de ses deux bords longitudinaux, on impose à la bande des contraintes telles qu'elle subit une déformation irréversible après relâchement des contraintes. Cette déformation irréversible, ou plastique, n'est pas nécessairement très grande mais elle est typiquement supérieure à 1%. Ce qui compte, c'est que cette plastification affecte une partie suffisante de l'épaisseur de la bande pour modifier l'état de contraintes résiduelles.

Pour déformer plastiquement la bande, on peut envisager un amincissement - par exemple par laminage -d'au moins 0,5%, de préférence supérieur à 1%. On peut également envisager un embossage se traduisant par la création de reliefs ou de creux dont l'amplitude est comprise entre 1/30 et 5 fois la valeur de l'épaisseur, de préférence entre 1/15 et 5 fois l'épaisseur, de préférence encore entre 1 /10 et 3 fois l'épaisseur.

Selon une modalité préférée de l'invention, on fait passer la bande dans l'entrefer compris entre deux cylindres sensiblement parallèles, la distance moyenne entre les deux cylindres étant inférieure à l'épaisseur initiale de la bande. Typiquement, ces cylindres doivent exercer sur la bande un effort compris entre 2,5 et 500 newtons par millimètre de largeur de bande.

Il s'agit en quelque sorte d'un calandrage simplifié, où le dispositif utilisé comporte un faible nombre de cylindres (par exemple limité à deux) et où lesdits cylindres ne sont pas forcément chauffés. Par la suite, nous appellerons cette opération "calandrage" ou, lorsque le terme est approprié, "embossage".

L'effort nécessaire dépend de la nature du ou des matériaux constitutifs de la bande. Lorsque celle-ci comporte plus de 70% de matière thermoplastique en volume, cet effort diminue avec la température moyenne à laquelle se trouve la bande et augmente avec le comportement visqueux du matériau thermoplastique.

Les cylindres peuvent être lisses et dans ce cas on impose un calandrage se traduisant par un amincissement plastique au moins égal à 0,5%, de préférence supérieur à 1%. Les cylindres peuvent également comporter des reliefs plus ou moins prononcés, permettant d'embosser la bande. L'amplitude du relief embossé est typiquement comprise entre un trentième et cinq fois l'épaisseur de la bande mais les meilleurs résultats sont obtenus avec des reliefs compris entre 1/10 et 3 fois l'épaisseur. L'effort à appliquer entre les cylindres est dans ce cas au moins égal à l'effort minimal nécessaire pour embosser la bande.

De préférence, si le relief embossé ne couvre pas toute la surface de la bande, il doit être réparti régulièrement de façon à pouvoir enrouler la bande sous forme de bobine régulière. Si le décor embossé n'est pas réparti régulièrement, il est alors préférable d'effectuer l'embossage directement sur la ligne de fabrication des jupes, en plaçant les cylindres en amont du dispositif qui permet de mettre la bande en forme de cylindre, par exemple en amont de la roulette centrale (630) ou, mieux, en amont du moyen de guidage latéral de la bande (60). Dans le cas où le relief est régulièrement réparti sur toute la largeur de la bande, l'effet de l'embossage sur l'aptitude de la bande à être mise en forme de cylindre est tellement marqué que ledit moyen de guidage latéral de la bande peut dans certains cas être considéré comme superflu.

Si la bande présente un comportement mécanique plastique prépondérant (aptitude à l'obtention d'une déformation irréversible sous faible contrainte), par exemple si elle comporte plus de 30% en volume d'un métal tel qu'un alliage d'aluminium, on peut effectuer soit un laminage, soit un embossage à température ambiante. Le laminage est réalisé avec un serrage entre cylindres tel que la limite élastique à l'ambiante dudit métal est atteinte: grossièrement, la déformation étant proche d'une déformation plane, l'effort de serrage entre cylindres doit se traduire, en l'absence d'effort de traction, par une contrainte normale voisine de 2/√3 fois la limite élastique. L'embossage est réalisé en appliquant un effort suffisant pour que les reliefs soient obtenus de façon irréversible.

Si la bande comporte une grande quantité de matériau thermoplastique, typiquement plus de 70% en volume, il est alors préférable de prévoir en amont de l'entrée de la bande dans l'entrefer entre les cylindres une zone de chauffage suffisamment longue pour que la température moyenne dans l'épaisseur de la bande atteigne une température comprise entre 75 et 120°C et soit maintenue à la température visée pendant au moins 0,5 seconde, juste avant d'entrer en contact avec les cylindres.

La bande comportant une grande quantité de matériau thermoplastique peut également comprendre des couches constituées de matériaux non thermoplastiques, tel que du papier, du métal ou encore des couches hétérogènes par exemple en matériaux non-tissés constitués de fibres comprimées thermiquement. Elle peut également comporter des couches en matière thermoplastique chargée de particules solides, typiquement en carbonate de calcium, en argile, en mica, etc... Elle doit toutefois comprendre au moins 70% de matériau thermoplastique en volume pour que l'effet bénéfique du traitement thermique préalable préconisé selon une modalité préférée de l'invention soit perceptible.

Si le passage entre les rouleaux se traduit par un embossage, l'un des rouleaux est de préférence métallique, l'autre en matériau élastomérique ou en caoutchouc. De préférence également, le rouleau métallique est refroidi de telle sorte que lorsque la bande, une fois sortie de l'entrefer entre les cylindres est soit enroulée sur une bobineuse, soit déformée en vue d'être mise sous forme d'un cylindre, sa température est proche de la température ambiante, typiquement inférieure à 40°C.

En général, la jupe du tube souple comporte un décor imprimé destiné à informer l'utilisateur du produit contenu par le tube. Dans le présent procédé de fabrication des tubes souples, le décor est imprimé sur la bande avant sa mise en forme de cylindre, par exemple avant ou au cours du passage de la bande dans l'entrefer compris entre les cylindres.

Les cylindres peuvent en un tel cas correspondre aux cylindres employés pour imprimer le décor, par flexographie ou typographie directe par exemple. Dans les cas où l'on veut embosser la bande, le rouleau gravé permettant l'embossage peut également servir à encrer les creux embossés, ce qui donne des effets de décor particuliers ("print valley").

Avec un telle étape préalable, la bande présente un comportement mécanique tel que son aptitude à être mise en forme de cylindre est grandement améliorée et que le manchon obtenu ne présente plus une section en forme de goutte d'eau (il présente donc une meilleure circularité) lorsqu'il sort de son dispositif de conformation (bande interne (620), bande externe froide (650) et mandrin central (62)). La meilleure aptitude de la bande à être mise en forme de cylindre est due à la présence moins fréquente d'ondulations latérales sur les bords de ladite bande et à une rigidité élastique de ladite bande plus importante dans le sens longitudinal et plus homogène dans le sens transversal.

En effet, l'étape préalable selon l'invention est une opération de calandrage / embossage qui a pour effet de régulariser la forme de la bande (moins d'ondulations latérales) et de diminuer l'amplitude des contraintes résiduelles régnant dans ladite bande. Cela a pour effet d'uniformiser le comportement élastique de la bande et, surtout lorsqu'il s'agit d'un embossage créant des reliefs et/ou des creux régulièrement répartis, d'augmenter la rigidité de la bande, autant da ns le sens long que dans le sens travers.

Ainsi, sous l'effet des efforts de flexion, la bande présente un rayon de courbure plus homogène dans toute sa largeur. De plus, ces efforts de flexion étant imposés localement (par la roulette centrale (630), par les moyens permettant de poursuivre le roulage de la bande entre X=XC et X=XD, par les galets de roulage (632) et (633)), la bande, plus rigide dans le sens longitudinal conserve mieux la forme imposée en dehors de la zone d'application desdits efforts. Tout ceci permet de mieux guider les bords de la bande au cours du roulage jusqu'à ce qu'ils soient mis en regard (ou accolés) en vue de leur soudure. On obtient donc une géométrie de recouvrement plus stable et la soudure réalisée est de meilleure qualité.

Enfin, l'uniformisation de la rigidité dans le sens travers et la diminution des contraintes résiduelles sont une explication possible du fait que le manchon présente une meilleure circularité après sa sortie du dispositif de conformation.

### FIGURES

Comme nous l'avons vu, les figures 1 à 4 illustrent un dispositif apte à mettre une bande en forme de manchon cylindrique. La figure 5 illustre deux sections de manchons. La figure 5a illustre une section en forme de goutte d'eau, relative à un manchon qui n'a pas subi le traitement préalable selon l'invention. La figure 5b est relative à un manchon qui a subi ledit traitement; elle présente une meilleure circularité.

### EXEMPLES

### Exemple 1

Une bande métalloplastique d'épaisseur globale 280 µm, de largeur 225 mm, présente la structure suivante:
PE.BD (90 µm)/EAA (25 µm)/aluminium (15µm)/EAA (20 µm)/PE.BD (130 µm)
avec PE.BD= polyéthylène basse densité
   EAA= copolymère (éthylène acide acrylique)

La bande se présente sous forme de bobine. Une première partie de la bande est utilisée sans avoir subi le traitement préalable selon l'invention. Elle est utilisée pour réaliser un manchon cylindrique comme il a été décrit précédemment et illustré dans les figures 1 à 4. Sa vitesse de défilement est de l'ordre de 30 m/mn.

Après avoir dévidé l'ensemble de la bobine, soit environ 1000 m, on constate que le manchon sort avec une soudure longitudinale de largeur variable, celle-ci variant entre 1,6 et 2,5 mm. Sa section sort du dispositif de conformation avec une forme en goutte d'eau du type de celle illustrée en figure 5a. L'ovalisation est mesurée en comparant les valeurs de deux diamètres orthogonaux L et P, l'axe L choisi correspondant au diamètre maximum. Sur la partie gauche du tableau 1, on observe que la moyenne du rapport entre ces diamètres est 0,95, avec un écart-type de 0,02.

Une autre partie de la même bande subit préalablement à sa mise en forme de cylindre un embossage à la température ambiante. Le dispositif d'embossage comprend un cylindre embosseur gravé avec des reliefs de hauteur comprise entre 50 et 100 µm et un cylindre d'appui en élastomère. L'effort appliqué sur le cylindre embosseur est de l'ordre de 200 kN.

Comme dans l'essai témoin décrit précédemment, la bande défile à une vitesse de l'ordre de 30 m/mn. Après embossage, la bande qui présente sur toute sa largeur un aspect "cuir" est enroulée pour former une bobine.

La bobine est ensuite utilisée pour réaliser un manchon cylindrique en suivant le procédé décrit précédemment. On constate que la soudure réalisée est de meilleure qualité que lorsque la bande n'est pas embossée; sa largeur varie mais l'amplitude de variation est nettement plus faible: entre 1,8 et 2,2 mm. Sa section sort du dispositif de conformation avec une forme circulaire du type de celle illustrée en figure 5b. Sur la partie droite du tableau 1, on observe que la moyenne du rapport entre ces diamètres est 0,99, avec un écart-type de 0,02

**Tableau 1**

| 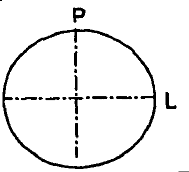 | **MESURES D'OVALISATION** | | | | | |
|---|---|---|---|---|---|---|
| | Tubes non embossés | | | Tubes embossés | | |
| | Mesure diamètre suivant axe L | Mesure diamètre suivant axe P | Rapport P/L | Mesure diamètre suivant axe L | Mesure diamètre suivant axe P | Rapport P/L |
| **Moyenne** | **36,45** | **34,55** | **0,95** | **35,5** | **35** | **0,99** |
| **Ecart-Type** | **0,36** | **0,36** | **0,02** | **0,46** | **0,26** | **0,02** |

D'autre part, on constate une amélioration des propriétés dites de "rebound". Le "rebound" est caractéristique de l'aptitude de la jupe de tube à retrouver sa forme cylindrique après une pressée. Plus cette valeur est élevée, meilleure est cette aptitude. On la mesure avec des essais de flexion standardisés faisant appel à la méthode de la lame d'appui: une moitié de jupe est découpée suivant un plan diamétral puis encastrée par ses extrémités sur un support. On enfonce le l'arche ainsi formée à l'aide d'un dispositif axial venant en appui sur la génératrice du sommet de l'arche (MD). D'autres essais ont été effectués sur une arche formée avec la demi-jupe fléchie dans une direction perpendiculaire à la direction axiale (CMD). On mesure la valeur de l'effort d'enfoncement correspondant à une déflexion donnée. Le tableau 2 suivant montre la valeur de l'effort (en N) correspondant à une déflexion de 5mm pour une jupe de 35mm de diamètre

**Tableau 2**

| **MESURES DE REBOUND** | | | |
|---|---|---|---|
| **Tubes non embossés** | | **Tubes embossés** | |
| **MD** | **1,1** | **MD** | **1,6** |
| **CMD** | **1,0** | **CMD** | **1,4** |

### Exemple 2

Une bande entièrement plastique d'épaisseur globale 280 µm, de largeur 225 mm, présente la structure suivante:
PE.BD (15 µm)/ PEHD (60 µm)/ PE.BD (75 µm) /EMA (10 µm)/ EVOH (20 µm)/ EMA (10 µm)/PE.BD (90 µm)
   avec PE.BD= polyéthylène basse densité
   PE.HD= polyéthylène haute densité
   EAA= copolymère (éthylène acide acrylique)

La bande se présente sous forme de bobine. Une première partie de la bande est utilisée sans avoir subi le traitement préalable selon l'invention. Elle est utilisée pour réaliser un manchon cylindrique comme il a été décrit précédemment et illustré dans les figures 1 à 4.

Après avoir dévidé l'ensemble de la bobine (environ 1000 m), on constate que le manchon sort avec une soudure longitudinale de largeur variable, celle-ci variant entre 1,4 et 2,6 mm. Sa section sort du dispositif de conformation avec une forme en goutte d'eau du type de celle illustrée en figure 5a. L'ovalisation est mesurée en comparant les valeurs de deux diamètres orthogonaux L et P, l'axe L choisi correspondant au diamètre maximum. Sur la partie gauche du tableau 3, on observe que la moyenne du rapport entre ces diamètres est 0,93, avec un écart-type de 0,02.

**Tableau 3**

| 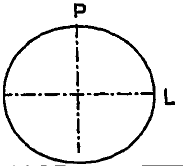 | MESURES D'OVALISATION | | | | | |
|---|---|---|---|---|---|---|
| | Tubes non embossés | | | Tubes embossés | | |
| | Mesure diamètre suivant axe L | Mesure diamètre suivant axe P | Rapport P/L | Mesure diamètre suivant axe L | Mesure diamètre suivant axe P | Rapport P/L |
| **Moyenne** | **36,65** | **34,15** | **0,93** | **35,45** | **35,05** | **0,99** |
| **Ecart-Type** | **0,41** | **0,41** | **0,02** | **0,50** | **0,28** | **0,02** |

Une autre partie de la même bande subit préalablement à sa mise en forme de cylindre un embossage destiné à lui donner un relief en "nid d'abeille" avec des motifs hexagonaux en creux de profondeur sensiblement égale à 70 µm. En amont du dispositif d'embossage, la bande passe au défilé dans un tunnel de chauffage. Elle y est portée à une température de 80°C est y est maintenue pendant au moins 0,6 seconde avant d'entrer dans l'entrefer du dispositif d'embossage. Le dispositif d'embossage comprend un cylindre embosseur gravé et un cylindre d'appui en élastomère. L'effort appliqué sur le cylindre embosseur est de l'ordre de 170 kN.

Le cylindre embosseur métallique est refroidi avec un circuit d'eau. De la sorte, la bande arrive sur la bobineuse à une température voisine de la température ambiante, en tout cas inférieure à 40°C.

La bobine est ensuite utilisée pour réaliser un manchon cylindrique. On constate que la soudure réalisée est de meilleure qualité; sa largeur varie entre 1,8 et 2,2 mm. Sa section sort du dispositif de conformation avec une forme circulaire.

D'autre part, on constate une amélioration des propriétés dites de "rebound" (voir description dans l'exemple 1). Le tableau 4 suivant montre la valeur de l'effort (en N) correspondant à une déflexion de 5mm pour une jupe de 35mm de diamètre

**Tableau 4**

| **MESURES DE REBOUND** | | | |
|---|---|---|---|
| **Tubes non embossés** | | **Tubes embossés** | |
| **MD** | **1,7** | **MD** | **2,4** |
| **CMD** | **1,4** | **CMD** | **2,4** |

## Revendications

1. Procédé de fabrication de jupes (41) de tubes souples comprenant une étape de fabrication d'un manchon (4) cylindrique à partir d'une bande (1) plane comprenant une ou plusieurs couches plastiques ou métalliques suivie d'une étape où ledit manchon (4) cylindrique est découpé à longueur voulue pour obtenir lesdites jupe (41), **caractérisé en ce qu'**il comprend une étape préalable à l'étape de fabrication du manchon cylindrique, dans laquelle on impose une déformation plastique à ladite bande (1).

2. Procédé selon la revendication 1 dans lequel on fait passer ladite bande (1) entre deux outillages mobiles l'un par rapport à l'autre et dont le rapprochement offre à ladite bande un entrefer de dimension inférieure à l'épaisseur initiale de la bande.

3. Procédé selon la revendication 2 dans lequel on applique un effort entre lesdits outillages tel que la bande sort dudit entrefer avec un amincissement plastique supérieur à 0,5%, de préférence supérieur à 1 %.

4. Procédé selon la revendication 2 ou 3 dans lequel on applique un effort entre lesdits outillages tel que la bande sortant dudit entrefer présente un décor embossé comportant des reliefs ou des creux dont l'amplitude est comprise entre le trentième et cinq fois l'épaisseur de ladite bande, de préférence entre le quinzième et cinq fois l'épaisseur, de préférence encore entre le dixième et 3 fois l'épaisseur.

5. Procédé selon l'une quelconque des revendications 2 à 4 dans lequel lesdits outillages mobiles sont des cylindres sensiblement parallèles, dont l'un au moins possède des reliefs gravés, de telle sorte que la bande ressort embossée après être passée entre lesdits cylindres.

6. Procédé selon l'une quelconque des revendications 2 à 5 dans lequel la bande est comprimée entre lesdits outillages avec un effort compris entre 2,5 et 500 newtons par millimètre de largeur de bande.

7. Procédé selon l'une quelconque des revendications 1 à 6, dans lequel ladite bande est portée à une température comprise entre 75°C et 120°C avant d'entrer en contact avec lesdits outillages.

8. Procédé selon la revendication 7 dans lequel ladite bande est maintenue à ladite température pendant au moins 1/2 seconde avant d'entrer en contact avec lesdits cylindres.

9. Procédé selon l'une quelconque des revendications 5 à 8, dans lequel au moins un cylindre est refroidi de telle sorte que lorsque la bande, une fois sortie de l'entrefer entre les cylindres, est soit enroulée sur une bobineuse, soit déformée en vue d'être mise sous forme d'un cylindre, sa température est proche de la température ambiante, typiquement inférieure à 40°C.

10. Procédé selon l'une quelconque des revendications 5 à 9 dans lequel le cylindre gravé est également utilisé pour imprimer un décor sur ladite bande.

## Claims

1. Method for making flexible tube skirts (41) including a step of making a cylindrical sleeve (4) from a planar web (1) including one or more plastic or metal layers followed by a step wherein said cylindrical sleeve (4) is cut out to the required length to obtain said skirts (41), **characterised in that** it includes a step prior to the step of making the cylindrical sleeve, wherein said web (1) is subjected to a plastic deformation.

2. Method according to claim 1 wherein said web (1) is passed between two tools moving one relative to the other and the space between which offers said web an air-gap of a dimension less than the initial thickness of the web.

3. Method according to claim 2 wherein a force is applied between said tools in such a way that the web emerges from said air-gap thinned plastically by more than 0.5%, preferably more than 1%.

4. Method according to claim 2 or 3 wherein a force is applied between said tools in such a way that the web emerging from said air-gap has an embossed decoration including raised surfaces or depths whereof the amplitude ranges between one thirtieth and five times the thickness of said web, preferably between one fifteenth and five times the thickness, preferably again between one tenth and 3 times the thickness.

5. Method according to any one of the claims 2 to 4 wherein said moving tools are substantially parallel rolls, at least one of which has etched raised surfaces, so that the web emerges embossed after passing between said rolls.

6. Method according to any one of the claims 2 to 5 wherein the web is compressed between said tools with a force of between2.5 and 500 newtons per millimetre of web width.

7. Method according to any one of the claims 1 to 6 wherein said web is raised to a temperature of between 75°C and 120°C before coming into contact with said tools.

8. Method according to claim 7 wherein said web is kept at said temperature for at least a ½ second before coming into contact with said rolls.

9. Method according to any one of the claims 5 to 8 wherein at least one roll is cooled such that its temperature is close to the ambient temperature, typically below 40°C, when the web, once it has emerged from the air-gap between the rolls, is either wound around a winder, or deformed with a view to shaping it into cylinder.

10. Method according to any one of the claims 5 to 9 wherein the etched roll is also used to imprint a decoration onto said web.

## Patentansprüche

1. Verfahren zur Herstellung von Tubenmänteln (41), umfassend einen Schritt zur Herstellung einer zylindrischen Hülse (4) aus einem flachen Band (1), welches eine oder mehrere Kunststoff- oder Metallschichten aufweist, gefolgt von einem Schritt, bei dem die zylindrische Hülse (4) auf die gewünschte Länge zugeschnitten wird, um die Tubenmäntel (41) zu erhalten, **dadurch gekennzeichnet, dass** es einen dem Schritt zur Herstellung der zylindrischen Hülse vorangehenden Schritt umfasst, bei dem das Band (1) einer plastischen Verformung unterzogen wird.

2. Verfahren nach Anspruch 1, bei dem das Band (1) durch zwei zueinander bewegliche Werkzeuge geführt wird, durch deren Aneinanderrücken dem Band ein Spalt geboten wird, dessen Abmessungen kleiner sind als die Ausgangsdicke des Bandes.

3. Verfahren nach Anspruch 2, bei dem zwischen den Werkzeugen eine solche Kraft aufgebracht wird, dass das Band mit einer plastischen Verdünnung von mehr als 0,5 %, vorzugsweise mehr als 1 % aus dem Spalt austritt.

4. Verfahren nach Anspruch 2 oder 3, bei dem zwischen den Werkzeugen eine solche Kraft aufgebracht wird, dass das aus dem Spalt austretende Band einen beulenförmig ausgebildeten Dekor mit Erhöhungen oder Vertiefungen aufweist, deren Amplitude zwischen einem Dreißigstel und der fünffachen Dicke des Bandes, vorzugsweise zwischen einem Fünfzehntel und der fünffachen Dicke und besonders bevorzugt zwischen einem Zehntel und der dreifachen Dicke liegt.

5. Verfahren nach irgendeinem der Ansprüche 2 bis 4, bei dem die beweglichen Werkzeuge weitgehend parallele Walzen sind, von denen mindestens eine geprägte Reliefs besitzt, so dass das Band nach dem Durchlauf durch die Walzen beulig austritt.

6. Verfahren nach irgendeinem der Ansprüche 2 bis 5, bei dem das Band mit einer Kraft von 2,5 bis 500 Newton pro Millimeter Bandbreite zwischen den Werkzeugen komprimiert wird.

7. Verfahren nach irgendeinem der Ansprüche 1 bis 6, bei dem das Band auf eine Temperatur von 75 bis 120°C erwärmt wird, bevor es mit den Werkzeugen in Kontakt kommt.

8. Verfahren nach Anspruch 7, bei dem das Band für mindestens eine halbe Sekunde auf der genannten Temperatur gehalten wird, bevor es mit den Walzen in Kontakt kommt.

9. Verfahren nach irgendeinem der Ansprüche 5 bis 8, bei dem mindestens eine Walze gekühlt ist, so dass das Band nach Austritt aus dem Walzenspalt entweder auf eine Haspel aufgewickelt oder umgeformt wird, um ihm die Form eines Zylinders zu geben, wobei seine Temperatur nahe an der Raumtemperatur liegt, typischerweise unterhalb 40°C.

10. Verfahren nach irgendeinem der Ansprüche 5 bis 9, bei dem die Prägewalze auch zum Aufdrucken eines Dekors auf das Band verwendet wird.
